Europäisches Patentamt

European Patent Office

Office européen des brevets

(19)

(11) Veröffentlichungsnummer: **0 301 388 B1**

(12) **EUROPÄISCHE PATENTSCHRIFT**

(45) Veröffentlichungstag der Patentschrift: **19.11.92**

(51) Int. Cl.⁵: **H04B 10/00**, G02F 1/29

(21) Anmeldenummer: **88111625.5**

(22) Anmeldetag: **19.07.88**

(54) **Reflektionssender für ein bidirektionales LWL-Kommunikationssystem.**

(30) Priorität: **31.07.87 DE 3725479**

(43) Veröffentlichungstag der Anmeldung:
**01.02.89 Patentblatt 89/05**

(45) Bekanntmachung des Hinweises auf die
Patenterteilung:
**19.11.92 Patentblatt 92/47**

(84) Benannte Vertragsstaaten:
**AT BE CH DE FR GB IT LI NL SE**

(56) Entgegenhaltungen:
**US-A- 4 291 939**
**US-A- 4 436 365**

**OPTICS COMMUNICATIONS, Band 36, Nr. 4,
15. Februar 1981, Seiten 281-284, North-
Holland Publishing Co., Amsterdam, NL; K.H.
TIETGEN et al.: "180 degree centigrades
turns in integrated optics"**

**ELECTRONICS LETTERS, Band 22, Nr. 9, April
1986, Seiten 479-481, Stevenage, Herts, GB;
J.K. WHEELER et al.: "Two-way transmission
using elec tro-optical modulator"**

(73) Patentinhaber: **SIEMENS AKTIENGESELL-
SCHAFT
Wittelsbacherplatz 2
W-8000 München 2(DE)**

(72) Erfinder: **Burghardt, Hartmut, Dr., Dipl.-Ing.
Ernst-Vogler-Weg 11
W-8150 Holzkirchen(DE)**
Erfinder: **Jahns, Jürgen, Dr. Dipl.-Phys.
Würzburger Ring 7
W-8520 Erlangen(DE)**
Erfinder: **Kindt, Stefan, Dr. Dipl.-Phys.
Buchendorfer Strasse 25
W-8000 München 71(DE)**

## Beschreibung

In einem mit einem Monomode-Lichtwellenleiter gebildeten bidirektionalen Kommunikationssystem ist es möglich, (eine) Lichtquelle(n) nur an einem Ende der LWL-Strecke und Reflektionsmittel sowie einen optischen Modulator am anderen Ende der LWL-Strecke vorzusehen (US-A 4 195 269, insbes. Sp.2, Z.32...44 und 51...55; DE-A 2 708 606; ELECTRONICS LETTERS 22(1986)9, 479...481, und 10, 517...518).

Ein optischer (Intensitäts-)Modulator kann mit einem steuerbaren optischen Richtkoppler ausgebildet sein (telcom report 10(1987)2, 90...98, Bilder 8 und 9). Ein solcher optischer Richtkoppler weist zwei gleichartige optische Streifenwellenleiter - das sind durch Eindiffusion (z.B. von Titan in Lithiumniobat) in einem Substrat erzeugte schmale dünne Streifen, die eine größere optische Brechzahl als das Substrat haben, - auf, die über eine bestimmte Länge eng (in einem Abstand von typisch 5 $\mu$m) nebeneinander geführt sind, so daß sich die optischen Felder von in den Streifenwellenleitern geführten Wellen überlappen und, mit der sog. Koppellänge periodisch wiederholt, Lichtenergie vom jeweils einen auf den jeweils anderen Streifenwellenleiter übergekoppelt wird; zwischen und neben den Streifenwellenleitern sind Elektroden vorgesehen, und zwischen diesen Elektroden erzeugte äußere elektrische Felder führen zu Änderungen des Brechungsindex' (sog. elektrooptischer Effekt) und damit der Ausbreitungsgeschwindigkeit und der Streuung mit der Folge, daß es auch zu entsprechenden Änderungen in der Lichtenergieüberkopplung kommt.

Die Erfindung stellt sich nun die Aufgabe, für ein bidirektionales LWL-Kommunikationssystem mit (einer) Lichtquelle(n) nur an einem Ende der LWL-Strecke einen Weg zu einer besonders zweckmäßigen Ausbildung von optischem Modulator und Reflektionsmitteln aufzuzeigen.

Die Erfindung betrifft einen Reflektionssender für ein bidirektionales LWL-Kommunikationssystem mit (einer) vorzugsweise durch (einen) Laser gebildeten Lichtquelle(n) nur an einem Ende des Lichtwellenleiters; dieser Reflektionssender ist erfindungsgemäß dadurch gekennzeichnet, daß er durch einen an seinem einen Ein-/Ausgang an den Lichtwellenleiter angeschlossenen halbierten steuerbaren optischen Richtkoppler gebildet ist, dessen beide Streifenwellenleiter mit einem teildurchlässigen Spiegel abgeschlossen sind und dessen Steuerelektroden mit dem Sendesignal beaufschlagt sind, wobei hinter dem teildurchlässigen Spiegel in weiterer Ausgestaltung der Erfindung ein von beiden Streifenwellenleitern mit dem Empfangs-Lichtsignal beaufschlagter optoelektrischer Wandler vorgesehen sein kann.

Es sei an dieser Stelle bemerkt, daß es (aus DE-A 3 108 814, FIG 1 und 2, und ebenso aus OPTICS COMMUNICATIONS 36(1981)4, 281...284, Fig.2 und 3) bekannt ist, einen sog. 180°-Umlenker mit einem halbierten Richtkoppler auszubilden, dessen Endfläche zur Erzielung einer verlustfreien 180°-Umlenkung vollverspiegelt sein soll. Probleme einer bidirektionalen Kommunikation und einer hierzu zu bewirkenden Modulation eines in sich selbst zu reflektierenden Lichtwellenzuges bleibt dabei unberührt; hierzu zeigt aber die Erfindung einen Weg.

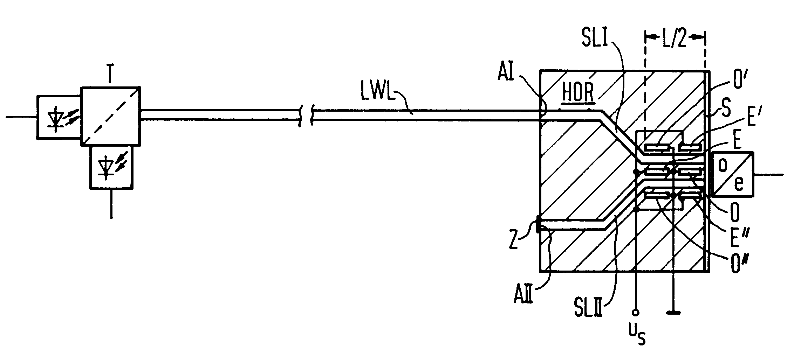

Die Erfindung bringt neben dem Vorteil einer im Vergleich zu einem Richtkoppler konventioneller Bauform halbierten Dämpfung des Lichts, wobei der Gewinn in der Größenordnung von einigen dB liegen kann, den weiteren Vorteil mit sich, daß sich der erforderliche Materialbedarf und auch der Platzbedarf praktisch ebenfalls halbieren; von Vorteil ist außerdem, daß eine optimale räumliche Anpassung an einen schnellen Fotodetektor möglich ist und man die beiden eng benachbarten Streifenwellenleiter des halbierten Richtkopplers durch den teildurchlässigen Spiegel hindurch mit der fotoaktiven Fläche eines einzigen Fotodetektors abdecken kann, so daß auch insoweit eine Aufwandshalbierung zu erzielen ist.

Weitere Besonderheiten der Erfindung werden aus der nachfolgenden näheren Erläuterung eines Ausführungsbeispiels anhand der Zeichnung ersichtlich.

Die Zeichnung zeigt schematisch ein Ausführungsbeispiel eines Reflektionssenders gemäß der Erfindung mit einem halbierten steuerbaren optischen Richtkoppler HOR, der an seinem einen Ein-/Ausgang AI an einen Lichtwellenleiter LWL angeschlossen ist; dieser Lichtwellenleiter LWL möge Bestandteil eines bidirektionalen LWL-Kommunikationssystems sein und dazu, wie dies auch in der Zeichnung angedeutet ist, an seinem anderen Ende einen Sender mit einem elektrooptischen Wandler, beispielsweise einer Laserdiode, und einen Empfänger mit einem optoelektrischen Wandler, beispielsweise einer pin-Diode, aufweisen, die über einen Strahlteiler T mit dem Lichtwellenleiter LWL verbunden sind. An seinem in der Zeichnung dargestellten Ende weist das bidirektionale LWL-Kommunikationssystem als Sender keine eigene Lichtquelle auf, sondern einen durch den halbierten steuerbaren optischen Richtkoppler HOR gebildeten Reflektionssender, der durch ein zum anderen Ende des bidirektionalen LWL-Kommunikationssystem hin zu übertragendes Sendesignal modulierbar ist.

Der halbierte steuerbare optische Richtkoppler HOR weist zwei in ein Substrat, z.B. Lithiumniobat, eindiffundierte Streifenwellenleiter SLI, SLII auf, deren einer (SLI) an seinem Ein-/Ausgang AI mit dem Lichtwellenleiter LWL verbunden ist. In dem eine Länge L/2 aufweisenden eigentlichen Koppelbereich sind die beiden Streifenwellenleiter SLI, SLII eng, in einem Abstand von typischerweise etwa 5 μm, nebeneinander geführt, so daß Lichtenergie von dem einen Streifenwellenleiter SLI auf den anderen Streifenwellenleiter SLII (und umgekehrt) übergekoppelt werden kann. Abgeschlossen sind die beiden Streifenwellenleiter SLI, SLII durch einen teildurchlässigen Spiegel S, hinter dem der optoelektrische Wandler o/e eines in weiteren Einzelheiten nicht mehr dargestellten Empfängers angeordnet ist; die enge Nachbarschaft und der kleine Querschnitt der beiden Streifenwellenleiter SLI, SLII machen es dabei möglich, daß beide Streifenwellenleiter auf die aktive Fläche ein und desselben, z.B. mit einer pin-Diode realisierten optoelektrischen Wandlers o/e führen.

Neben und zwischen den Streifenwellenleitern SLI, SLII befinden sich die Steuerelektroden E, E', E" und O, O', O" des halbierten steuerbaren optischen Richtkopplers HOR, die mit dem über den Lichtwellenleiter LWL zu übertragenden Sendesignal, beispielsweise einem 140-Mbit/s-Signal, beaufschlagt sind. Wie dies auch in der Zeichnung angedeutet ist, können dabei die Elektroden abschnittsweise gegensätzlich gepolt sein, wie dies bei sog. $\Delta\,\beta$-Reversal-Richtkopplern grundsätzlich bekannt ist. Dies schafft bessere Möglichkeiten des elektrischen Abgleichs und ermöglicht es damit, eine nahezu 100%ige Modulation zu erzielen.

Der in der Zeichnung skizzierte Reflektionssender arbeitet dann wie folgt: Ein von der Gegenseite des LWL-Kommunikationssystems her über den Lichtwellenleiter LWL übertragenes (z.B. 565-Mbit/s-) Lichtsignal vorzugsweise niedrigen Modulationsgrads (z.B. 10%) tritt am Ein-/ Ausgang AI in den Streifenwellenleiter SLI ein und wird im Kopplungsbereich L/2 des halbierten steuerbaren optischen Richtkopplers HOR nach Maßgabe der zwischen dessen Steuerelektroden E, E', E" und O, O', O" anliegenden Sendespannung $u_s$ mit einem mehr oder weniger großen Intensitätsanteil in den Streifenwellenleiter SLII übergekoppelt; die Summe der Lichtintensitäten in den beiden Streifenwellenleitern SLI und SLII bleibt dabei gleich der Intensität des über den Lichtwellenleiter LWL empfangenen Lichtsignals. Der dem Transmissionsgrad des teildurchlässigen Spiegels S von beispielsweise etwa 15 % entsprechende Anteil des in den beiden Streifenwellenleitern SLI, SLII geführten Empfangs-Lichtsignals, der durch den teildurchlässigen Spiegel S hindurchtritt und zu dem dahinterliegenden optoelektrischen Wandler o/e gelangt, ist somit unabhängig von dem an den Steuerelektroden E, E', E" und O, O', O" gerade anliegenden Sendesignal.

Der nicht zum optoelektrischen Wandler o/e gelangte, dem Reflektionsgrad des teildurchlässigen Spiegels S von im Beispiel etwa 85 % entsprechende Anteil des in den beiden Streifenwellenleitern SLI, SLII geführten Lichts wird am teildurchlässigen Spiegel S reflektiert und durchläuft den Kopplungsbereich L/2 erneut, wobei es wiederum nach Maßgabe der an den Steuerelektroden E, E', E" und O, O', O" anliegenden Sendespannung $u_s$ zu einer mehr oder weniger intensiven Überkopplung zwischen den Streifenwellenleitern SLI, SLII kommt.

Insgesamt wirkt sich die zwischen den beiden Streifenwellenleitern SLI, SLII bewirkte, sendesignalgesteuerte Überkopplung als eine Intensitätsmodulation (vorzugsweise mit hohem Modulationsgrad (z.B. 100%)) des Lichts aus, das wieder zum Ein-/Ausgang AI des Streifenwellenleiters SLI und damit zurück in den Lichtwellenleiter LWL gelangt, wo es dann in Rückrichtung zu dem anderen Ende des LWL-Kommunikationssystems hin übertragen wird. Je nach dem Momentanwert des Sendesignals kann dabei im einen Grenzfall das ganze Licht wieder zum Ein-/Ausgang AI des Streifenwellenleiters SLI und damit zurück in den Lichtwellenleiter LWL gelangen, und im anderen Grenzfall kann - jedenfalls dann, wenn die Länge L/2 des Kopplungsbereichs gleich einem ungeradzahligen Vielfachen der halben sog. Koppellänge $L_0$ ist, wenn also $L/2 = (2n + 1)\cdot L_0/2$ mit n = 0, 1, 2, ... ist, - das ganze Licht auf den Streifenwellenleiter SLII übergekoppelt werden. Die einfache Koppellänge $L_0$ wird dabei durch die sog. Koppelkonstante $x$ mit $L_0 = \pi/2x$ festgelegt, wobei $x$ selbst wieder von den geometrischen Größen wie Breite und Durchmesser der Streifenwellenleiter abhängt. Im allgemeinen, nämlich bei zwischen den Grenzwerten liegendem Momentanwert des Sendesignals, wird man sich zwischen den beschriebenen Grenzfällen bewegen.

Um störende Reflektionen im Streifenwellenleiter SLII zu vermeiden, wird dessen Ein-/Ausgang AII zweckmäßigerweise mit einem Lichtabsorber abgeschlossen, der das auf ihn vom Streifenwellenleiter SLII her auftreffende Licht völlig absorbiert; in der Zeichnung ist eine solche lichtabsorbierende Schicht mit Z bezeichnet.

Um Unabhängigkeit von der Polarisationsrichtung des über den Lichtwellenleiter LWL ankommenden Lichtes zu erreichen, kann für ein $LiNbO_3$-Substrat, in dem die Streifenwellenleiter SLI, SLII durch Eindiffusion von Titan gebildet werden, ein spezieller Schnitt des $LiNbO_3$-Kristalls verwendet werden, für den die elektrooptischen Koeffizienten für TE- und TM-Modem gleich sind.

Abschließend sei noch bemerkt, daß in dem in der Zeichnung skizzierten Ausführungsbeispiel eines Reflektionssenders gemäß der Erfindung die mit dem Sendesignal beaufschlagbaren Richtkoppler-Elektroden abschnittsweise gegensätzlich gepolt angeordnet sind; es sei jedoch bemerkt, daß die Erfindung hierauf nicht beschränkt ist, sondern daß ggf. auch eine Anordnung mit nur einfachen, neben bzw. zwischen den Streifenwellenleitern angeordneten Steuerelektroden vorgesehen sein kann, wobei diese Elektroden sich dann über den ganzen Kopplungsbereich L/2 erstrecken.

## Patentansprüche

1. Reflektionssender für ein bidirektionales LWL-Kommunikationssystem mit (einer) vorzugsweise durch (einen) Laser gebildeten Lichtquelle-(n) nur an einem Ende des Lichtwellenleiters, **dadurch gekennzeichnet,** daß er durch einen an seinem einen Ein-/Ausgang (AI) an den Lichtwellenleiter (LWL) angeschlossenen halbierten steuerbaren optischen Richtkoppler (HOR) gebildet ist, dessen beide Streifenwellenleiter (SLI, SLII) mit einem teildurchlässigen Spiegel (S) abgeschlossen sind und dessen Steuerelektroden (E,O) mit dem Sendesignal beaufschlagt sind.

2. Reflektionssender nach Anspruch 1, **dadurch gekennzeichnet,** daß hinter dem teildurchlässigen Spiegel (S) ein von beiden Streifenwellenleitern (SLI, SLII) mit dem Empfangs-Lichtsignal beaufschlagter optoelektrischer Wandler (o/e) vorgesehen ist.

3. Reflektionssender nach Anspruch 1 oder 2, **dadurch gekennzeichnet,** daß der andere Ein-/Ausgang (AII) des halbierten Richtkopplers (HOR) mit einem Lichtabsorber (Z) abgeschlossen ist.

4. Reflektionssender nach einem der vorhergehenden Ansprüche, **dadurch gekennzeichnet,** daß die mit dem Sendesignal beaufschlagbaren Richtkoppler-Elektroden (E, O) abschnittsweise gegensätzlich gepolt angeordnet sind.

## Claims

1. Reflex transmitter for a bidirectional fibre-optic communication system having (one) light source(s) preferably formed by (one) laser(s) only at one end of the optical fibre, characterised in that it is formed by a halved controllable optical directional coupler (HOR) connected at its one input/output (AI) to the optical fibre (LWL), the two strip waveguides (SLI, SLII) of which directional coupler are terminated by a partially reflecting mirror (S), and to whose control electrodes (E,O) the transmission signal is applied.

2. Reflex transmitter according to Claim 1, characterised in that an opto-electrical transducer (o/e) to which the received light signal is applied from the two Strip waveguides (SLI, SLII) is provided behind the partially reflecting mirror (S).

3. Reflex transmitter according to Claim 1 or 2, characterised in that the other input/output (AII) of the halved directional coupler (HOR) is terminated by a light absorber (Z).

4. Reflex transmitter according to one of the preceding claims, characterised in that the directional coupler electrodes (E, O) to which the transmission signal can be applied are arranged oppositely polarised in sections.

## Revendications

1. Émetteur à réflexion pour un système de communication bidirectionnel à guides d'ondes optiques comportant une ou des sources de lumière formées de préférence par un ou par des lasers, uniquement à une extrémité du guide d'ondes optiques, caractérisé par le fait qu'il est formé par un coupleur optique directionnel commandable (HOR), dédoublé, dont une entrée/sortie (AI) est raccordée au guide d'ondes optiques (LWL) et dont les deux guides d'ondes en forme de bandes (SLI, SLII) sont fermés par un miroir partiellement transparent (S) et dont les électrodes de commande (E,O) sont chargées par le signal d'émission.

2. Émetteur à réflexion suivant la revendication 1, caractérisé par le fait qu'en aval du miroir partiellement transparent (S), il est prévu un transducteur optoélectrique (o/e) chargé par un signal lumineux de réception par les deux guides d'ondes en forme de bandes (SLI, SLII).

3. Émetteur à réflexion suivant la revendication 1 ou 2, caractérisé par le fait que l'autre entrée/sortie (AII) du coupleur directionnel (HOR) subdivisé en deux est fermée par un absorbeur de lumière (Z).

4. Émetteur à réflexion suivant l'une des revendications précédentes, caractérisé par le fait que les électrodes (E,O) du coupleur directionnel, qui peuvent être chargées par le signal d'émission, sont disposées en étant polarisées en sens opposé, par intervalles.